# EUROPEAN PATENT SPECIFICATION

(11) **EP 2 086 905 B1**
(45) Date of publication and mention of the grant of the patent: **17.11.2010**
(21) Application number: 07821542.3
(22) Date of filing: 18.10.2007
(51) Int. Cl.: C04B 22/02, C04B 26/26

(54) **PROCESS FOR MANUFACTURING AN ASPHALT PAVING MIXTURE**
VERFAHREN ZUR HERSTELLUNG EINER ASPHALTSTRASSENBELAGSMISCHUNG
PROCÉDÉ DE FABRICATION D'UN MÉLANGE POUR REVÊTEMENT EN ASPHALTE

(30) Priority: 19.10.2006 EP 06255375
(43) Date of publication of application: 12.08.2009
(73) Proprietor: Shell Internationale Research Maatschappij B.V., 2596 HR The Hague (NL)
(72) Inventor: DEME, Imants, Burlington, Ontario L7R 3X4 (CA)
(74) Representative: Matthezing, Robert Maarten
(86) International application number: PCT/EP2007/061178
(87) International publication number: WO 2008/046899

(56) References cited:
- WO-A-03/014231
- WO-A-2005/059016
- GB-A- 2 040 275

## Description

### Field of the Invention

The invention relates to a process for manufacturing an asphalt paving mixture wherein sulphur is incorporated into the asphalt paving mixture.

### Background of the Invention

In the road construction and road paving industry, it is a well-practised procedure to coat aggregate material such as sand, gravel, crushed stone or mixtures thereof with hot fluid bitumen, spread the coated material as a uniform layer on a road bed or previously built road while it is still hot, and compact the uniform layer by rolling with heavy rollers to form a smooth surfaced road.

The combination of bitumen with aggregate material, such as sand, gravel, crushed stone or mixtures thereof, is referred to as "asphalt". Bitumen, also referred to as "asphalt binder", is usually a liquid binder comprising asphaltenes, resins and solvents. Bitumen can for example comprise pyrogenous mixtures derived from petroleum residues such as residual oils, tar or pitch or mixtures thereof.

It is known in the art that sulphur can be mixed with bitumen for applications in the road construction and road paving industry. Efforts towards improving the addition of sulphur to bitumen are for example described in GB 1,528,384. One of the problems encountered when using sulphur in bitumen is the unwanted formation of hydrogen sulphide, resulting from dehydrogenation reactions between bitumen and sulphur at high temperatures.

Even low hydrogen sulphide emissions present an emission nuisance on road paving projects. Hydrogen sulphide gas concentration can gradually increase to high levels in the air voids in the loose paving mixture during storage in silos and during truck delivery to the paving site. The "stored" gas is released when the air pockets in the mixture are opened up as the mixture is dumped from the delivery trucks or as the mixture is subjected to mechanical mixing.

In view of the substantial amounts of sulphur used, especially in asphalt having high sulphur-bitumen weight ratios, e.g. as high as 1:1, hydrogen sulphide emission is a serious nuisance. Therefore, it is desirable to reduce the unwanted formation and emission of hydrogen sulphide from sulphur-comprising asphalt.

One method to reduce hydrogen sulphide emission from hot cast sulphur-asphalt mixtures is described in WO 2005/059016. Incorporating a hydrogen sulphide-suppressant such as ferric chloride into sulphur pellets can reduce hydrogen sulphide emissions during the manufacture of sulphur-containing asphalt. However, ferric sulphide can be difficult to handle and is liable to react with moisture in the air, so it is desirable to find alternative means of reducing hydrogen sulphide emission from sulphur-asphalt mixtures.

### Summary of the Invention

The inventors have now discovered that reductions in hydrogen sulphide emissions can be achieved when the sulphur pellets that are used in the asphalt manufacturing process contain a monovinyl aromatic compound.

Accordingly, the present invention provides a process for manufacturing an asphalt paving mixture, the process comprising the steps of:
(i) heating bitumen at a temperature of from 100 to 200°C;
(ii) heating aggregate at a temperature of from 100 to 200°C;
(iii) mixing the hot bitumen with the hot aggregate in a mixing unit,
wherein from 10 to 200 wt% of sulphur pellets, based upon the weight of the bitumen, are added in at least one of the steps (i), (ii) or (iii),
and wherein the sulphur pellets comprise from 1 to 50wt% of a monovinyl aromatic compound, based upon the weight of the sulphur pellets.

The inventors have found that using sulphur pellets that comprise a monovinyl aromatic compound significantly reduces the hydrogen sulphide emissions during the process for manufacturing the asphalt paving mixture. The monovinyl aromatic compound is readily incorporated into the sulphur pellets with no handling difficulties.

The invention also provides asphalt paving mixtures obtained by the process of the invention.

### Detailed Description of the Invention

Reference herein to pellets is to any type of sulphur material that has been cast from the molten state into some kind of regularly sized particle, for example flakes, slates or sphere-shaped sulphur such as prills, granules, nuggets and pastilles or half pea sized sulphur.

The sulphur pellets comprise from 1 to 50wt% of a monovinyl aromatic compound, based upon the weight of the sulphur pellets, typically from 2wt%, preferably from 5wt% and most preferably from 8wt%; and typically to 40wt%, preferably to 30wt% and most preferably to 20wt%. A preferred range is from 5 to 30wt% and a most preferred range is from 8 to 20wt%.

The monovinyl aromatic compound typically has the following general formula: 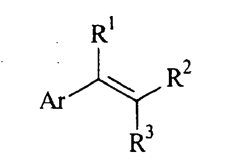 wherein Ar is an aromatic group and R¹, R² and R³ are independently chosen from hydrogen and C₁₋₁₀ alkyl. Ar is typically phenyl, C₁₋₁₀ alkyl-substituted phenyl, naphthalene or C₁₋₁₀ alkyl-substituted naphthalene, and is preferably phenyl, tolyl or xylyl. R¹, R² and R³ are preferably hydrogen or methyl and are most preferably all hydrogen such that the monovinyl aromatic compound contains a terminal alkene. Preferred monovinyl aromatic compounds include styrene, vinyl toluene, vinyl xylene, ethyl vinyl benzene and vinyl naphthalene, and the most preferred monovinyl aromatic compounds are styrene and vinyl toluene.

The sulphur pellets typically comprise from 50 to 99wt% of sulphur, based upon the weight of the sulphur pellets, preferably from 60wt% and most preferably from 70wt%; and typically to 95wt%, and preferably to 90wt%. A preferred range is from 60 to 90wt%.

The sulphur pellets may comprise other components, for example, they may comprise amyl acetate in a concentration of at least about 0.08wt% based upon the weight of the pellet and carbon at a concentration of at least 0.25wt%. As described in WO 03/14231, liquid sulphur can be plasticized by the addition of carbon at a concentration of at least 0.25wt% and can be further treated with amyl acetate at a concentration of at least about 0.08wt% to produce an even more manageable plasticized sulphur pellet.

Sulphur pellets comprising vinyl toluene or styrene and additionally comprising a diolefin such as dicyclopentadiene are disclosed in US 4,290,816. These sulphur pellets could be used in the present invention, but preferably the sulphur pellets used in the present invention do not comprise diolefins. Most preferably the sulphur pellets used in the process of the present invention consist of sulphur, from 1 to 50wt% of one or more monovinyl aromatic compounds, from 0 to 2wt% of carbon and from 0 to 2wt% of amyl acetate. The sulphur pellets of US 4,290,816 are disclosed for as a replacement for bitumen in asphalt paving compositions, whereas in the present invention 10 to 200wt% of sulphur pellets, based upon the weight of the bitumen, are combined with bitumen and aggregate.

The sulphur pellets used in the present invention are suitably prepared by a process wherein liquid sulphur is mixed with a monovinyl aromatic compound and optionally additional components such as carbon or amyl acetate. The mixture is then shaped and/or pelletised.

Alternatively, a monovinyl aromatic compound can be coated onto sulphur pellets that optionally contain other components such as carbon or amyl acetate.

In step (i) of the process according to the invention bitumen is heated, suitably at a temperature of from 100 to 200°C, preferably from 120 to 180°C, more preferably from 130 to 150°C. The bitumen is preferably a paving grade bitumen suitable for road application having a penetration of, for example, 15 to 450dmm (tested at 25°C according to EN 1426: 1999) and a softening point of from 25 to 76°C (tested according to EN 1427: 1999).

In step (ii) of the process aggregate is heated, suitably at a temperature of from 100 to 200°C, preferably from 120 to 180°C, more preferably from 130 to 150°C. The aggregate is suitably any aggregate that is suitable for road applications. The aggregate may consist of a mixture of coarse aggregate (retained on a 2.36mm sieve), fine aggregate (passes a 2.36mm sieve but is retained on a 75µm sieve) and filler (passes a 75µm sieve).

In step (iii), the hot bitumen and hot aggregate are mixed in a mixing unit. Suitably, the mixing takes place at a temperature of from 100 to 200°C, preferably from 120 to 180°C, more preferably from 130 to 150°C. Typically, the mixing time is from 10 to 60 seconds, preferably from 20 to 40 seconds.

The sulphur pellets are added in at least one of the steps (i), (ii) or (iii). In one embodiment of the invention the sulphur pellets are heated and melted prior to addition in at last one of the steps (i), (ii) or (iii), but preferably the sulphur pellets are not melted before addition.

Preferably, the addition of sulphur pellets is followed by mixing for a time from 5 to 600 seconds, preferably from 10 to 100 seconds.

In a preferred embodiment, hot aggregate is mixed with the sulphur pellets. Hot bitumen is then added to the hot aggregate-sulphur mixture.

In another preferred embodiment, hot aggregate is mixed with hot bitumen and the sulphur pellets are added to the hot bitumen-aggregate mixture. This embodiment offers the advantage of producing a stronger sulphur-asphalt mixture strength.

In yet another preferred embodiment, hot bitumen is mixed with sulphur pellets and the resulting hot bitumen-sulphur mixture is mixed with hot aggregate to obtain a sulphur-comprising asphalt mixture.

The amount of sulphur pellets added to the bitumen, aggregate or bitumen/aggregate mixture is from 10 to 200 wt%, based upon the weight of the bitumen, preferably from 20wt%, more preferably from 40wt% and preferably to 100wt%, more preferably to 80wt%. The presence of sulphur in the asphalt paving mixture can improve the strength and rutting resistance of the paving mixture and it is important to include sufficient sulphur to realise these advantages. Additionally, incorporating increased amounts of sulphur can decrease the cost of the paving mixture. However, too much sulphur can decrease the workability of the paving mixture so it is important not to use more than 200wt% of sulphur pellets, preferably not more than 100wt%.

Typically, the bitumen/aggregate mixture comprises at least 1wt% of bitumen, based on the total weight of the mixture. Mixtures comprising from about 1 weight% to about 10 weight% of bitumen are preferred, with a special preference for mixtures comprising from about 3 weight % to about 6 weight % of bitumen based on the total weight of the mixture.

The sulphur-comprising asphalt paving mixture thus obtained can be used in the paving of roads, for example by applying it to the road with a paving machine, typically followed by roller compaction until the required density has been reached.

The invention will now be described by reference to examples which are not intended to be limiting of the invention.

### Examples

Styrene or vinyl toluene were reacted with elemental sulphur or SEAM pellets. SEAM pellets consist predominantly of sulphur and are available from Shell Canada Limited.

50g of the each sulphur sample was blended with 50g of hot PG64-28 grade bitumen in a metal can and placed on a hot plate with surface temperature set at 160°C. A filter paper cover with a central hole in the top was placed over the metal can immediately after mixing the sulphur sample with the bitumen. Hydrogen sulphide emissions were measured via a hose inserted in the air space in the can with a Draeger MiniWarn gas meter equipped with a pump. The hydrogen sulphide measurement range was 1 to 100ppm.

Table 1 shows the peak hydrogen sulphide readings for the various samples:

**Table 1**

| Styrene/ Vinyl-toluene | SEAM pellet/ Sulphur | Reacted Sulphur product (g) | Bitumen (g) | Temp. (°C) | Peak H₂S reading (ppm) |
|---|---|---|---|---|---|
| None | 100% SEAM | 48.8 | 51.3 | 146 | 100+ |
| None | 100% sulphur | 50.6 | 52.2 | 147 | 100+ |
| 10% styrene | 90% SEAM | 50.1 | 48.0 | 148 | 31 |
| 15% styrene | 85% SEAM | 52.0 | 53.8 | 146 | 34 |
| 10% styrene | 90% sulphur | 56.7 | 51.6 | 148 | 44 |
| 15% styrene | 85% sulphur | 50.3 | 50.1 | 145 | 23 |
| 10% vinyl-toluene | 90% SEAM | 50.7 | 49.2 | 148 | 45 |
| 15% vinyl-toluene | 85% SEAM | 50.2 | 47.5 | 148 | 64 |
| 10% vinyl-toluene | 90% sulphur | 58.8 | 47.5 | 148 | 54 |
| 15% vinyl-toluene | 85% sulphur | 52.5 | 49.2 | 146 | 45 |
| 10% styrene* | 90% SEAM* | 50.4* | 51.2* | 144* | 51* |
| 15% styrene* | 85% SEAM* | 52.5* | 51.0* | 141* | 46* |
| None | 100% SEAM* | 52.6* | 52.6* | 143* | 100+* |

Entries marked with * were repeat tests after the sulphur samples had been stored in the oven at 150°C for 5 hours.

The sulphur samples containing styrene or vinyl-toluene showed considerably lower hydrogen sulphide emissions when combined with bitumen compared to the sulphur samples not containing styrene or vinyl-toluene (the upper limit of the detection was 100ppm so the hydrogen sulphide levels for the three samples without styrene or vinyl-toluene were probably higher than 100ppm). It can therefore be concluded that in a process wherein sulphur containing styrene or vinyl-toluene is combined with bitumen and aggregate, the hydrogen sulphide emissions will be significantly lower than in a process wherein the sulphur does not contain styrene or vinyl-toluene.

## Claims

1. A process for manufacturing an asphalt paving mixture, the process comprising the steps of:
(i) heating bitumen at a temperature of from 100 to 200°C;
(ii) heating aggregate at a temperature of from 100 to 200°C;
(iii) mixing the hot bitumen with the hot aggregate in a mixing unit,
wherein from 10 to 200 wt% of sulphur pellets, based upon the weight of the bitumen, are added in at least one of the steps (i), (ii) or (iii),
and wherein the sulphur pellets comprise from 1 to 50wt% of a monovinyl aromatic compound, based upon the weight of the sulphur pellets.

2. A process according to claim 1, wherein the sulphur pellets comprise from 8 to 20wt% of the monovinyl aromatic compound, based upon the weight of the sulphur pellets.

3. A process according to claim 1 or claim 2, wherein the monovinyl aromatic compound is styrene or vinyl toluene.

4. A process according to any preceding claim, wherein the sulphur pellets comprise amyl acetate in a concentration of at least about 0.08wt% based upon the weight of the pellet and carbon at a concentration of at least 0.25wt%.

5. A process according to any preceding claim, wherein the amount of sulphur pellets added in at least one of the steps (i), (ii) or (iii) is from 40 to 80wt%, based upon the weight of the bitumen.

6. A process according to any preceding claim, wherein the amount of bitumen is from 1 to 10 wt%, based upon the combined weight of bitumen and aggregate.

7. A paving mixture obtained according to any preceding claim.

## Patentansprüche

1. Verfahren zur Herstellung einer Asphaltmischung für Straßenbelag, wobei das Verfahren folgende Schritte umfasst:
(i) Erhitzen von Bitumen auf einer Temperatur von 100°C bis 200°C;
(ii) Erhitzen von Gesteinskörnungen auf eine Temperatur von 100°C bis 200°C;
(iii)Vermischen des heißen Bitumens mit den heißen Gesteinskömungen in einer Mischeinheit,
wobei Schwefelpellets zu einem Anteil von 10 bis 200 Gew-%, bezogen auf das Gewicht des Bitumens, in mindestens einem der Schritte (i), (ii) oder (iii) hinzugefügt werden,
und wobei die Schwefelpellets zu einem Anteil von 1 bis 50 Gew-%, bezogen auf das Gewicht der Schwefelpellets, eine aromatische Monovinylverbindung enthalten.

2. Verfahren nach Anspruch 1, wobei die Schwefelpellets zu einem Anteil von 8 bis 20 Gew-%, bezogen auf das Gewicht der Schwefelpellets, eine aromatische Monovinylverbindung enthalten.

3. Verfahren nach Anspruch 1 oder 2, wobei als Monovinylverbindung Styrol oder Vinyltoluol benutzt wird.

4. Verfahren nach einem der vorangegangenen Ansprüche, wobei die Schwefelpellets aus Amylacetat in einer Konzentration von mindestens circa 0,08 Gew-%, bezogen auf das Gewicht der Pellets, und aus Kohlenstoff in einer Konzentration von mindestens 0,25 Gew-% bestehen.

5. Verfahren nach einem der vorangegangenen Ansprüche, wobei die Menge an Schwefelpellets, die in einem der Schritte (i), (ii) oder (iii) hinzugefügt wird, 40 bis 80 Gew-%, bezogen auf das Gewicht des Bitumens, beträgt.

6. Verfahren nach einem der vorangegangenen Ansprüche, wobei die Menge an Bitumen 1 bis 10 Gew-%, bezogen auf das Gesamtgewicht des Bitumens und der Gesteinskömungen, beträgt.

7. Ein Gemisch für Straßenbelag, das nach einem der vorangegangenen Ansprüche gewonnen wird.

## Revendications

1. Procédé de fabrication d'un mélange de recouvrement d'asphalte, le procédé comprenant les étapes consistant à :
(i) chauffer du bitume à une température de 100 à 200 °C ;
(ii) chauffer un agrégat à une température de 100 à 200 °C ;
(iii) mélanger le bitume chaud à l'agrégat chaud dans une unité de mélange,
dans lequel une quantité de 10 à 200 % en poids de pastilles de soufre, sur la base du poids du bitume, est ajoutée au cours d'au moins l'une des étapes (i), (ii) ou (iii),
et dans lequel les pastilles de soufre comprennent 1 à 50 % en poids d'un composé monovinylaromatique sur la base du poids des pastilles de soufre.

2. Procédé selon la revendication 1, dans lequel les pastilles de soufre comprennent 8 à 20 % en poids du composé monovinylaromatique sur la base du poids des pastilles de soufre.

3. Procédé selon la revendication 1 ou la revendication 2, dans lequel le composé monovinylaromatique est le styrène ou le vinyltoluène.

4. Procédé selon l'une quelconque des revendications précédentes, dans lequel les pastilles de soufre comprennent de l'acétate d'amyle en concentration d'au moins environ 0,08 % en poids sur la base du poids des pastilles, et du carbone en concentration d'au moins 0,25 % en poids.

5. Procédé selon l'une quelconque des revendications précédentes, dans lequel la quantité de pastilles de soufre ajoutée lors d'au moins l'une des étapes (i), (ii) ou (iii) est de 40 à 80 % en poids sur la base du poids du bitume.

6. Procédé selon l'une quelconque des revendications précédentes, dans lequel la quantité de bitume est de 1 à 10 % en poids sur la base du poids combiné du bitume et de l'agrégat.

7. Mélange de recouvrement obtenu selon l'une quelconque des revendications précédentes.
